# EUROPEAN PATENT APPLICATION

(11) **EP 4 796 377 A2**
(43) Date of publication of application: **26.08.2026**
(21) Application number: 26153267.5
(22) Date of filing: 21.01.2026
(51) Int. Cl.: B60L 53/62, B60L 53/63, B60L 53/68, B60L 53/67, B60L 53/65, H01M 10/44, H02J 7/40, H02J 7/92, H02J 7/94, H02J 7/96

(54) **MANAGEMENT SERVER, MANAGEMENT SYSTEM, MANAGEMENT METHOD, AND SPECIFIC PROGRAM**

(30) Priority: 03.02.2025 JP 2025016121
(71) Applicant: TOYOTA JIDOSHA KABUSHIKI KAISHA, Toyota-shi, Aichi-ken, 471-8571 (JP)
(72) Inventor: NAKAMURA, Tohru, TOYOTA-SHI, AICHI-KEN, 471-8571 (JP)
(74) Representative: Cabinet Beau de Loménie

(57) **Abstract**

A management server (40) performs charging management of a battery (23) of a vehicle (20). The management server includes an execution device (43). The execution device (43) performs the specific process, which is not performed when charging-power tapering control is not being performed, upon detecting that the vehicle has performed charging-power tapering control on the battery being charged. When the vehicle performs charging-power tapering control, the execution device performs charging management after performing the specific process.

## Description

### CROSS-REFERENCE TO RELATED APPLICATIONS

This application is based upon and claims the benefit of priority from Japanese Patent Application No. 2025-016121, filed on February 3, 2025, the entire contents of which are incorporated herein by reference and to which the person of the art can refer when considering the present disclosure.

### BACKGROUND

### 1. Field

The present disclosure relates to a management server, a management system, a management method, and a specific program.

### 2. Description of Related Art

JP2018-061433A discloses a management system. The management system includes a power supply facility, a vehicle having a battery to be charged by the power supply facility, and a management server that manages charging of the battery.

In the management system disclosed in the above publication, the vehicle may execute charging-power tapering control. The charging-power tapering control reduces a charging power when charging of the battery nears completion. The management system may fail to properly manage charging when the charging-power tapering control is executed.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A management server according to an aspect of the present disclosure is configured to perform charging management of a battery of a vehicle. The management server includes an execution device. The execution device is configured to, in response to execution of charging-power tapering control by the vehicle on the battery being charged, execute a specific process that is not executed when the charging-power tapering control is not executed, and execute the charging management after performing the specific process.

A management system according to an aspect of the present disclosure is configured to perform charging management of a battery of a vehicle. The management system is configured to, in response to detecting that the vehicle has performed charging-power tapering control on the battery being charged, execute a specific process that is not executed when the charging-power tapering control is not executed, and execute the charging management after performing the specific process.

A management method according to an aspect of the present disclosure is performed by a management system including a computer that is configured to perform charging management of a battery of a vehicle. The management method includes, in response to detecting that the vehicle has performed charging-power tapering control on the battery being charged, executing a specific process that is not executed when the charging-power tapering control is not executed, and executing the charging management after performing the specific process.

A specific program according to an aspect of the present disclosure is executed by a computer that is configured to perform charging management of a battery of a vehicle. The specific program causes the computer to, in response to detecting that the vehicle has performed charging-power tapering control on the battery being charged, execute a specific process that is not executed when the charging-power tapering control is not executed, and execute the charging management after performing the specific process.

Other features and aspects will be apparent from the following detailed description, the drawings, and the claims.

### BRIEF DESCRIPTION OF THE DRAWINGS

Fig. 1 is a schematic diagram showing a management system according to a first embodiment.
Fig. 2 is a schematic diagram illustrating a state where the vehicle is connected to the power supply facility in the management system of Fig. 1.
Fig. 3 is a graph illustrating the identification charging command.
Fig. 4 is a schematic diagram illustrating the database.
Fig. 5 is a graph illustrating a first taper profile.
Fig. 6 is a graph illustrating a second taper profile.
Fig. 7 is a flowchart illustrating a series of processes for identifying the type of vehicle performed by the power supply facility of Fig. 1.
Fig. 8 is a flowchart illustrating a series of processes for identifying the type of vehicle performed by the management server of Fig. 1.
Fig. 9 is a flowchart illustrating a series of processes related to the estimated time performed by the management server in Fig. 1.
Fig. 10 is a flowchart illustrating a series of processes including a specific process performed by the management server of Fig. 1.
Fig. 11 is a flowchart illustrating a series of processes including a specific process performed by the management server according to a second embodiment.
Fig. 12 is a graph illustrating energy management performed by the management server according to the second embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

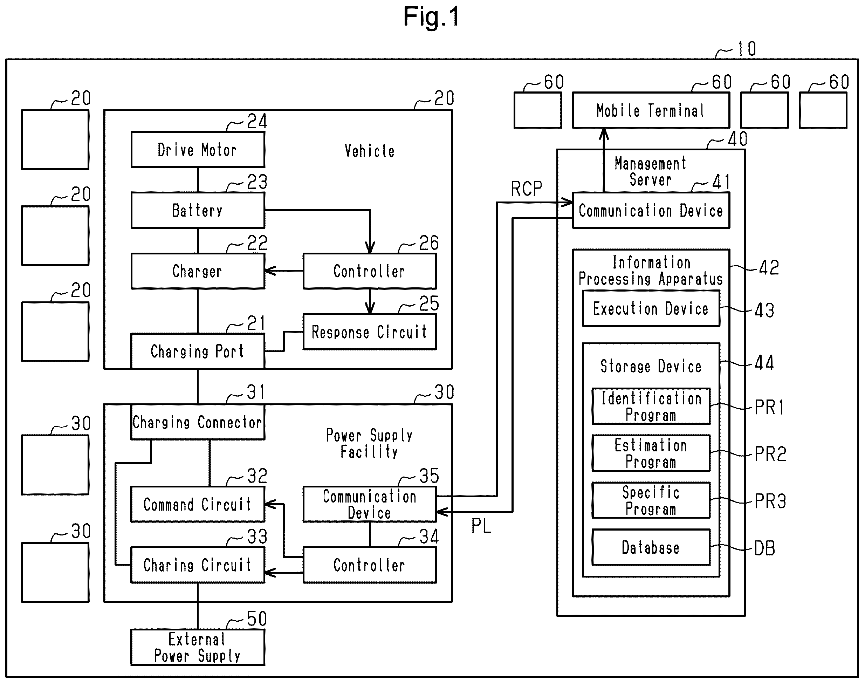

As shown in Fig. 1, a management system 10 includes vehicles 20, power supply facilities 30, a management server 40, and an external power supply 50, and mobile terminals 60. The management system 10 manages charging of the vehicles 20 performed by the power supply facilities 30.

### Overview of Management System

Each vehicle 20 includes a charging port 21, a charger 22, a battery 23, and a drive motor 24. The vehicle 20 is a battery electric vehicle. Each power supply facility 30 includes a charging connector 31 that is connectable to the corresponding charging port 21. Connecting the charging connector 31 to the charging port 21 allows the power supply facility 30 to charge the battery 23. Connecting the charging connector 31 to the charging port 21 allows the vehicle 20 to respond to the power supply facility 30.

The drive motor 24 is a drive source for the vehicle 20. The drive motor 24 drives the vehicle 20 using electrical energy stored in the battery 23. The battery 23 stores electrical energy for operating the drive motor 24.

The charger 22 includes a relay that switches connection and disconnection of an electric power path between the charging port 21 and the battery 23, and a power conversion circuit. The battery 23 is charged by controlling the charger 22.

The vehicle 20 includes a response circuit 25 and a controller 26. The response circuit 25 enables the vehicle 20 to respond to a charging command that is issued from the power supply facility 30. The response circuit 25 generates a response charging profile RCP, which will be described later, using a PWM signal. The response circuit 25 generates a response indicating a charging power in the form of a PWM signal in response to a charging command at a specified power PX in accordance with a charging plan PL, which will be described later.

The controller 26 controls the charger 22 to charge the battery 23. Upon detecting that the charging connector 31 has been connected to the charging port 21, the controller 26 controls the charger 22 to start charging the battery 23. The controller 26 controls the charger 22 to stop charging the battery 23 based on the state of charge of the battery 23. In Fig. 1, detailed illustration is provided only for one vehicle 20, while illustration of the other vehicles 20 is partially omitted.

Each power supply facility 30 supplies electric power from the external power supply 50 to the corresponding vehicle 20 to charge the battery 23 of the vehicle 20. The power supply facility 30 is electric vehicle supply equipment (EVSE). The power supply facility 30 includes the charging connector 31, a command circuit 32, a charging circuit 33, a controller 34, and a communication device 35.

Each charging connector 31 is connectable to the charging port 21 of the corresponding vehicle 20. The charging connector 31 is connected to the command circuit 32 using a cable. The charging connector 31 is connected to the external power supply 50 via the charging circuit 33 using a cable. The external power supply 50 is provided outside the power supply facility 30. Connecting the charging connector 31 to the charging port 21 allows the power supply facility 30 to supply electric power from the external power supply 50 to the battery 23 via the charging circuit 33.

The command circuit 32 sends a charging command to the vehicle 20. Charging the charging connector 31 to the charging port 21 allows the command circuit 32 to send a charging command to the vehicle 20. The charging command includes a maximum current command value, which will be described later.

The charging circuit 33 charges the battery 23 from the external power supply 50. Connecting the charging connector 31 to the charging port 21 allows the charging circuit 33 to supply electric power from the external power supply 50 to the battery 23.

The controller 34 controls the supply of power from the external power supply 50 to the battery 23 of the vehicle 20 in accordance with the charging plan PL. The charging plan PL is acquired from the management server 40 via the communication device 35. The charging plan PL is time-series data representing a charging power per unit time requested for a predetermined time. In Fig. 1, detailed illustration is provided only for one power supply facility 30, while illustration of the other power supply facilities 30 is partially omitted.

The management server 40 performs charging management for multiple vehicles 20. The management server 40 manages the time of charging the vehicle 20 for each type of vehicle 20 based on an expected travel distance D for traveling per charge. For example, in a first type of vehicle 20, a notification is displayed on a display of the vehicle 20 and the mobile terminal 60 associated with the vehicle 20 such that the vehicle 20 is charged by the power supply facility 30 when the vehicle 20 travels by a first distance D1. For example, in a second type of vehicle 20, a notification is displayed on a display of the vehicle 20 and the mobile terminal 60 associated with the vehicle 20 such that the vehicle 20 is charged by the power supply facility 30 when the vehicle 20 travels by a second distance D2.

For the vehicle that has started charging finishes charging, the management server 40 manages notification of the time at which the vehicle 20 will finish charging. The management server 40 sends a notification, indicating an expected time at which the vehicle 20 that has started charging will finish charging, to the mobile terminal 60 associated with that vehicle 20. Thus, the management server 40 causes the mobile terminal 60 to display the expected time at which the vehicle 20 will finish charging.

The management server 40 includes a communication device 41 and an information processing apparatus 42. The communication device 41 is communicable with the power supply facility 30 via a wireless communication line.

The information processing apparatus 42 includes an execution device 43, which is processing circuitry, and a storage device 44. The execution device 43 is a CPU including a processor. The storage device 44 is a memory. The storage device 44 stores a database DB, an identification program PR1, an estimation program PR2, and a specific program PR3.

As will be described later, the information processing apparatus 42 executes the identification program PR1 to identify the type of vehicle subject to charging, that is, a target vehicle having the battery 23 that is charged by the power supply facility 30. Then, the information processing apparatus 42 generates the charging plan PL, which is used to charge the battery 23 of the target vehicle from the power supply facility 30, in accordance with the identified type of the target vehicle. The information processing apparatus 42 sends information indicating the generated charging plan PL to the power supply facility 30 via the communication device 41.

The mobile terminal 60 is a display device that displays a notification received from the management server 40. The mobile terminal 60 is registered in the database DB in association with each vehicle 20. That is, the storage device 44 stores the mobile terminal 60 associated with the vehicle 20.

### CPLT Function

The power supply facility 30 has a control pilot (CPLT) function. The CPLT function determines whether the charging connector 31 is connected to the charging port 21, and starts charging when a connection is detected.

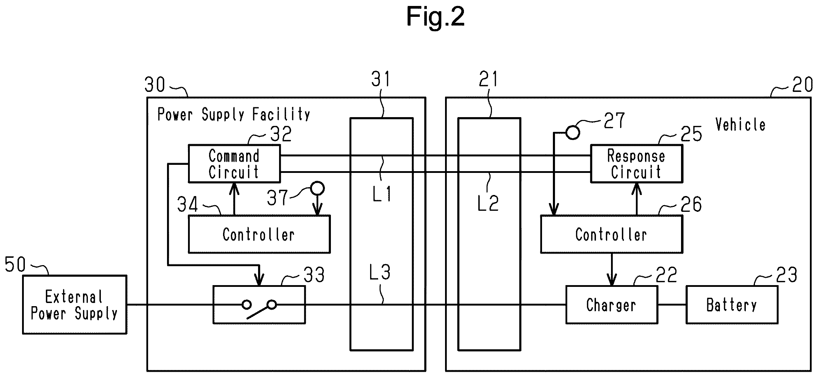

As shown in Fig. 2, with the charging connector 31 connected to the charging port 21, a command line L1 for sending a charging command connects the command circuit 32 to the response circuit 25. The command line L1 is a power line. With the charging connector 31 connected to the charging port 21, a response line L2 for sending a response connects the command circuit 32 to the response circuit 25. The response line L2 is a power line. With the charging connector 31 connected to the charging port 21, a power supply line L3 for supplying power from the external power supply 50 to the battery 23 connects the charging circuit 33 to the charger 22. The power supply line L3 is a power line.

The command circuit 32 includes, for example, a 12-V power supply for detecting whether the charging connector 31 is connected to the charging port 21. The command circuit 32 applies a voltage from the power supply to the command line L1. The response circuit 25 includes a first resistor and a second resistor.

The voltage applied to the command line L1 varies depending on whether the charging connector 31 is connected to the charging port 21, as a result of the presence of the first resistor included in the response circuit 25.

The controller 34 acquires the voltage of the command line L1 from a voltage sensor, which detects the voltage of the command line L1. The controller 34 determines whether the charging connector 31 is connected to the charging port 21 based on the acquired voltage of the command line L1.

Specifically, with the charging connector 31 disconnected from the charging port 21, the voltage of the command line L1 remains at 12 V, which is the voltage applied from a power supply of the command circuit 32. Connecting the charging connector 31 to the charging port 21 changes the voltage of the command line L1 from 12 V to, for example, 9 V, as a result of the presence of the first resistor included in the response circuit 25. Thus, the controller 34 determines that the charging connector 31 has been connected to the charging port 21.

When the controller 34 determines that the charging connector 31 has been connected to the charging port 21, the controller 26 outputs a PWM signal to the command line L1. The voltage range of the PWM signal is, for example, from -12 V to +12 V. The duty ratio range of the PWM signal is, for example, from 5% to 96%. In this case, the PWM signal indicates a value from 6 A to 80 A as the maximum current command value.

The controller 26 acquires the maximum current command value output to the command line L1 from the sensor 27, which detects the PWM signal of the command line L1. Then, in order to indicate that charging can be started, the controller 26 changes the voltage applied to the command line L1 by means of the second resistor included in the response circuit 25. Connecting the second resistor to the command line L1 changes the voltage of the command line L1 to, for example, 6 V. Thus, the controller 34 detects that the vehicle 20 can start charging.

Upon detecting that charging can be started by the vehicle 20, the controller 34 controls, for example, a switch included in the charging circuit 33 to apply an AC voltage of 200 V from the external power supply 50 to the power supply line L3.

When an AC voltage of 200 V is applied to the power supply line L3, the controller 26 controls the charger 22. Under this control, the controller 26 starts the battery 23 such that the electric power to be supplied to the battery 23 remains at a current that is less than or equal to the maximum current command value and converts into a DC voltage using the power conversion circuit.

As described above, upon connection of the charging connector 31 to the charging port 21, the power supply facility 30 starts charging the battery 23 with the CPLT function. Power line communication is carried out between the power supply facility 30 and the vehicle 20. Thus, the power supply facility 30 cannot acquire vehicle identification information, such as an identification number for identifying the vehicle 20, from the vehicle 20.

As shown in Fig. 1, the communication device 35 is communicable with the management server 40 via a wireless communication line. The vehicle 20 cannot perform wireless communication with the management server 40 via a wireless communication line. Thus, the management server 40 cannot acquire vehicle identification information from the vehicle 20.

### Identification Charging Command

As shown in Fig. 2, the controller 34 controls the command circuit 32 to output a predetermined identification charging command DCC to the vehicle 20 via the command line L1. The identification charging command DCC is issued to identify the type of vehicle 20.

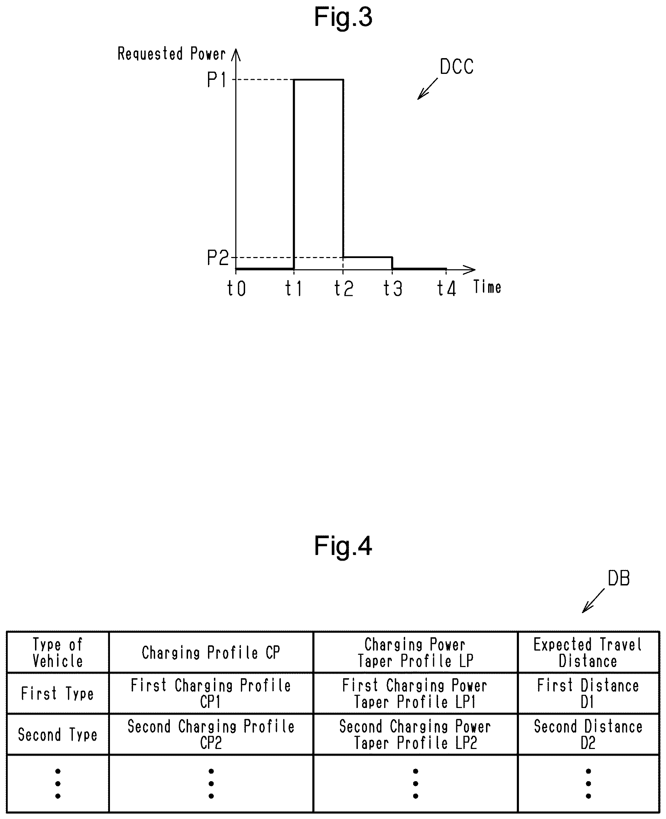

As shown in Fig. 3, the identification charging command DCC is time-series data representing a requested power to the vehicle 20 (i.e., the power at which the vehicle is to be charged). Specifically, the identification charging command DCC instructs that the requested power be zero from time t0 to time t1. The identification charging command DCC instructs that the requested power be a first power P1 from time t1 to time t2. The first power P1 is, for example, 6 kW. A change in power from zero to the first power P1 is greater than or equal to a specified magnitude. Thus, the identification charging command DCC includes a charging request that has a change in electric power that is greater than or equal to a specified magnitude. The specified magnitude is a power magnitude predetermined through testing or simulation in order to identify the type of vehicle 20. The specified magnitude is, for example, 3 kW.

The identification charging command DCC instructs that the requested power be a second power P2 from time t2 to time t3. The second power P2 is smaller than the first power P1. The second power P2 is, for example, 0.5 kW. A change in power from the first power P1 to the second power P2 is greater than or equal to a specified magnitude. Thus, the identification charging command DCC includes a charging request that has a change in electric power that is greater than or equal to a specified magnitude.

The identification charging command DCC instructs that the requested power be zero from time t3 to time t4. At time t4, the identification charging command DCC ends the present charging command. As described above, the identification charging command DCC is time-series data representing the requested power from time t0 to time t4.

When the vehicle 20 charges the battery 23 in accordance with a charging command, the controller 26 charges the battery 23 such that the current is less than or equal to the maximum current command value. Accordingly, even when an identical charging command is obtained, the battery 23 of each type of vehicle 20 is charged at a charging power different from the requested power specified in the charging command.

### Database

As shown in Fig. 4, the database DB includes charging profiles CP respectively associated with different types of the vehicle 20, charging power taper profiles LP respectively associated with different types of the vehicle 20, and expected travel distances D respectively associated with different types of the vehicle 20.

The charging profiles CP are time-series data representing a charging power that is obtained when the vehicle 20 charges the battery 23 in accordance with the identification charging command DCC. The charging profiles CP are obtained in advance through testing or simulation.

The types of vehicle 20 include a first type and a second type. The charging profile CP associated with the first type is a first charging profile CP1. The charging profile CP associated with the second type is a second charging profile CP2. That is, the storage device 44 stores each charging profile CP for the corresponding type of vehicle 20.

The first charging profile CP1 is generated when the first type of vehicle 20 charges the battery 23 in accordance with the identification charging command DCC. For example, the first charging profile CP1 indicates that the vehicle 20 charged the battery 23 in accordance with the identification charging command DCC but did not charge the battery 23 at the first power P1 according to a request to charge at the first power P1.

Specifically, the first charging profile CP1 indicates that the charging power is zero from time t0 to time t1. The first charging profile CP1 indicates that the charging power is less than the first power P1 and greater than or equal to the second power P2 from time t1 to time t2 although charging at the first power P1 is requested during the same period. Specifically, the charging power from time t1 to time t2 is a charging power that is half of the first power P1.

The first charging profile CP1 indicates that the charging power is the second power P2 from time t2 to time t3. The first charging profile CP1 indicates that the charging power is zero from time t3 to time t4.

The second charging profile CP2 is generated when the second type of vehicle 20 charges the battery 23 in accordance with the identification charging command DCC. For example, the second charging profile CP2 indicates that there is a response delay in the charging power with respect to a change in a requested power that is greater than or equal to a specified magnitude when the vehicle 20 charges the battery 23 in accordance with the identification charging command DCC.

Specifically, the second charging profile CP2 indicates that the charging power is zero from time t0 to time t1. The second charging profile CP2 indicates that the charging power gradually increases from zero to the first power P1 between time t1 and time t2 and then remains the first power P1. That is, the second charging profile CP2 indicates that there is a response delay in a change in which the requested power increases from zero to the first power P1.

The second charging profile CP2 indicates that the charging power gradually decreases from the first power P1 to the second power P2 between time t2 and time t3 and then remains the second power P2. That is, the second charging profile CP2 indicates that there is a response delay in a change in which the requested power decreases from the first power P1 to the second power P2. The second charging profile CP2 indicates that the charging power is zero from time t3 to time t4.

The charging power taper profile LP is time-series data representing the charging power obtained when charging-power tapering control is performed while the vehicle 20 is charging the battery 23 with the specified power PX. The charging power taper profile LP includes data indicating a required period NT from the start of charging-power tapering control to the end of the charging of the battery 23. Multiple charging power taper profiles LP are obtained in advance through testing or simulation.

The charging power taper profile LP associated with the first type is a first taper profile LP1. The charging power taper profile LP associated with the second type is a second taper profile LP2. That is, the storage device 44 stores each charging power taper profile LP for the corresponding type of vehicle 20.

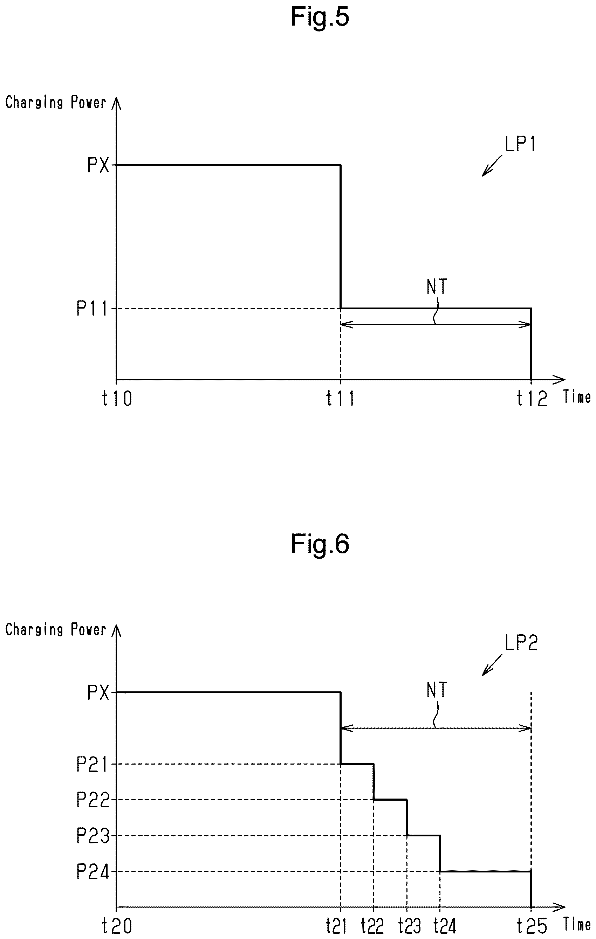

As shown in Fig. 5, the first taper profile LP1 is time-series data representing the charging power obtained when charging-power tapering control is performed while the first type of vehicle 20 is charging the battery 23 with the specified power PX.

Specifically, the first taper profile LP1 indicates that the charging power is the specified power PX from time t10, after charging with the specified power PX is started, to time t11, at which charging-power tapering control is started.

The first taper profile LP1 indicates that the charging power is reduced from the specified power PX to a first taper power P11 at time t11, at which charging-power tapering control is started. The first taper profile LP1 indicates that the charging power is the first taper power P11 from time t11, at which charging-power tapering control is started, to time t12, at which the charging-power tapering control is finished.

The first taper profile LP1 indicates that the charging power becomes zero at time t12. That is, the first taper profile LP1 indicates that the charging-power tapering control and the charging are finished at time t12. Thus, in the first taper profile LP1, the period from time t11 to time t12 is the required period NT.

As shown in Fig. 6, the second taper profile LP2 is time-series data representing the charging power obtained when charging-power tapering control is performed while the second type of vehicle 20 is charging the battery 23 with the specified power PX.

Specifically, the second taper profile LP2 indicates that the charging power is the specified power PX from time t20, after charging with the specified power PX is started, to time t21, at which charging-power tapering control is started.

The second taper profile LP2 indicates that the charging power is reduced from the specified power PX to a first taper power P21 at time t21, at which charging-power tapering control is started. The second taper profile LP2 indicates that the charging power is the first taper power P21 from time t21 to time t22, which is subsequent to time t21.

The second taper profile LP2 indicates that the charging power is reduced from the first taper power P21 to a second taper power P22 at time t22. The second taper power P22 is smaller than the first taper power P21. The second taper profile LP2 indicates that the charging power is the second taper power P22 from time t22 to time t23, which is subsequent to time t22.

The second taper profile LP2 indicates that the charging power is reduced from the second taper power P22 to a third taper power P23 at time t23. The third taper power P23 is smaller than the second taper power P22. The second taper profile LP2 indicates that the charging power is the third taper power P23 from time t23 to time t24, which is subsequent to time t23.

The second taper profile LP2 indicates that the charging power is reduced from the third taper power P23 to a fourth taper power P24 at time t24. The fourth taper power P24 is smaller than the third taper power P23. The second taper profile LP2 indicates that the charging power is the fourth taper power P24 from time t24 to time t25, which is subsequent to time t24.

The second taper profile LP2 indicates that the charging power becomes zero at time t25. That is, the second taper profile LP2 indicates that the charging-power tapering control and the charging are finished at time t25. Thus, in the second taper profile LP2, the period from time t21 to time t25 is the required period NT. In this manner, the second taper profile LP2 indicates that the charging power is reduced in a stepwise manner by reducing the charging power a number of times.

The expected travel distance D represents a distance to be traveled per charge when the management server 40 performs operation management. The expected travel distance D associated with the first type is a first distance D1. The expected travel distance D associated with the second type is a second distance D2. Multiple expected travel distances D are acquired in advance through testing or simulation.

### Vehicle Type Identification

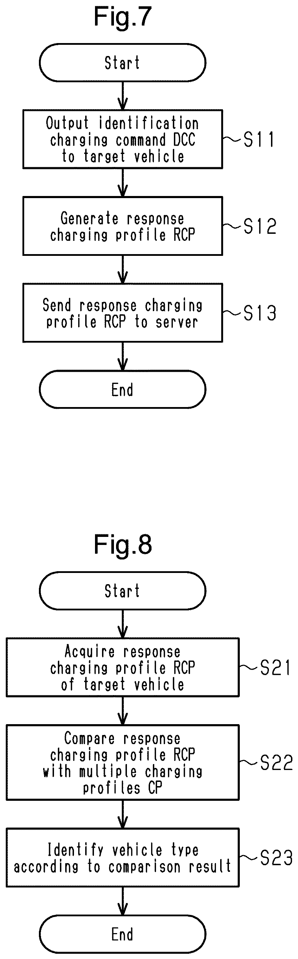

Referring to Fig. 7, upon connection of the charging connector 31 to the charging port 21 of a target vehicle, the controller 34 starts a series of processes for identifying the type of the target vehicle. Upon starting the series of processes for identifying the type of the target vehicle, the controller 34 first performs the process of step S11.

In step S11, the controller 34 outputs the identification charging command DCC to the target vehicle. Then, the controller 34 advances the process to step S12.

In step S12, the controller 34 generates a response charging profile RCP in response to the identification charging command DCC when the target vehicle charges the battery 23 in accordance with the identification charging command DCC. The response charging profile RCP is time-series data representing a charging power obtained when the target vehicle charges the battery 23 in accordance with the identification charging command DCC.

Specifically, in the target vehicle to which the identification charging command DCC has been input, the controller 26 controls the response circuit 25 to output the time-series data, which represents the charging power obtained when charging is performed in accordance with the identification charging command DCC, to the power supply facility 30 via the response line L2. The response circuit 25 outputs a PWM signal to the response line L2. The PWM signal indicates the value of current during charging. The controller 34 calculates the value of current during charging based on a detection value from the sensor 37, which detects the PWM signal. The controller 34 calculates the charging power by multiplying, the calculated value of current, the value of voltage obtained during charging by the charging circuit 33. Then, the controller 34 generates, as the response charging profile RCP, time-series data representing the calculated charging power. Then, the controller 34 advances the process to step S13.

In step S13, the controller 34 sends data indicating the generated response charging profile RCP from the communication device 35 to the management server 40. Subsequently, the controller 34 ends the series of processes in the current cycle.

As shown in Fig. 8, after the communication device 41 receives the data indicating the response charging profile RCP, the information processing apparatus 42 starts a series of processes for identifying the type of the target vehicle. In the information processing apparatus 42, the execution device 43 starts executing the identification program PR1 to start the series of processes for identifying the type of the target vehicle.

Upon starting execution of the identification program PR1, the execution device 43 first starts the process of step S21. In step S21, the execution device 43 acquires the response charging profile RCP of the target vehicle received by the communication device 41. Then, the execution device 43 advances the process to step S22.

In step S22, the execution device 43 compares the response charging profile RCP with multiple charging profiles CP. In step S22, the execution device 43 outputs, as a comparison result, one of the charging profiles CP that match the response charging profile RCP.

For example, the execution device 43 fits the response charging profile RCP to each of the charging profiles CP. Then, as a result of the fitting, the execution device 43 outputs the best-matching one of the charging profiles CP as a comparison result.

Specifically, when the charging power from time t1 to time t2 as indicated by the response charging profile RCP is half of the first power P1, the execution device 43 outputs the first charging profile CP1 as a comparison result. When there is a response delay in the changes of the charging power from time t1 and from time t2 as indicated by the response charging profile RCP, the execution device 43 outputs the second charging profile CP2 as a comparison result. Then, the execution device 43 advances the process to step S23.

In step S23, the execution device 43 identifies the type of the target vehicle based on the result of comparison between the response charging profile RCP and the charging profiles CP.

Specifically, the execution device 43 determines that the type of the target vehicle is the type of vehicle 20 associated with the charging profile CP that matches the response charging profile RCP in step S22. Thus, for example, when the execution device 43 outputs a comparison result indicating that the response charging profile RCP matches the first charging profile CP1, the execution device 43 determines that the type of the target vehicle is the first type.

For example, when the execution device 43 outputs a comparison result indicating that the response charging profile RCP matches the second charging profile CP2, the execution device 43 determines that the type of the target vehicle is the second type.

In this manner, the execution device 43 identifies the type of the target vehicle based on the response charging profile RCP and multiple charging profiles CP. The execution device 43 identifies the type of vehicle 20 according to the result of comparison between the response charging profile RCP and the charging profiles CP.

Upon ending the process of step S23, the execution device 43 ends the series of processes in the current cycle. Subsequently, the execution device 43 sends the charging plan PL corresponding to the identified type of vehicle 20 to the power supply facility 30 as a charging command. Then, the power supply facility 30 outputs the charging command such that charging can be performed in accordance with the charging plan PL corresponding to the type of vehicle 20. For example, the charging plans PL generated according to different types of the vehicles 20 are the same in that the charging with the specified power PX is requested but are different in the time for which the charging is requested.

### Estimated Time that is Calculated at the Start of Charging

When sending the charging plan PL as a charging command to the power supply facility 30, that is, when starting the charging based on the charging plan PL, the execution device 43 starts a series of processes for calculating and displaying the estimated time PT by starting execution of the estimation program PR2.

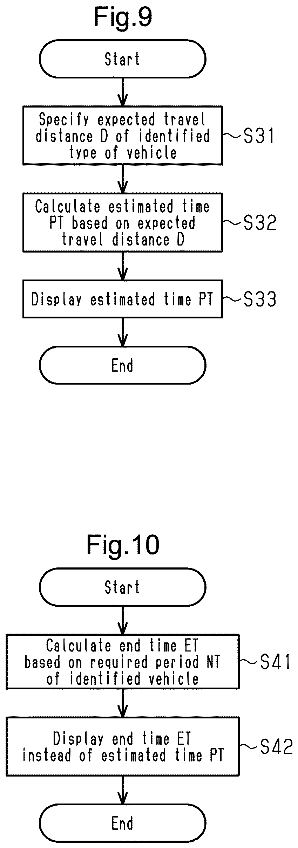

As illustrated in Fig. 9, upon starting execution of the estimation program PR2, the execution device 43 first starts the process of step S31. In step S31, the execution device 43 specifies the expected travel distance D associated with the type of vehicle 20 that was identified by executing the identification program PR1.

For example, when identifying the type of vehicle 20 as the first type, the execution device 43 specifies the expected travel distance D as the first distance D1. For example, when identifying the type of vehicle 20 as the second type, the execution device 43 specifies the expected travel distance D as the second distance D2. Then, the execution device 43 advances the process to step S32.

In step S32, the execution device 43 calculates the estimated time PT based on the specified expected travel distance D. The estimated time PT refers to the time at which charging of the battery 23 of the vehicle 20 that has started charging based on the charging plan PL is estimated to end. The estimated time PT is calculated to increase as the expected travel distance D increases. Then, the execution device 43 advances the process to step S33.

In step S33, the execution device 43 causes the mobile terminal 60 associated with the vehicle 20 that has started charging to display the calculated estimated time PT. Then, the execution device 43 ends the series of processes in the present cycle.

### Calculation of the End Time as the Specific Process

Upon starting charging the battery 23 of the vehicle 20 using the charging plan PL as a charging command, the power supply facility 30 outputs a charging command with the specified power PX to the vehicle 20.

When the vehicle 20 receives the charging command with the specified power PX, the controller 26 performs charging with the specified power PX. Then, the controller 26 controls the response circuit 25 to output, to the power supply facility 30, a response indicating that charging with the specified power PX is being performed.

While the power supply facility 30 is receiving the response to the charging command from the response circuit 25, the controller 34 monitors whether charging-power tapering control is being performed in response to the charging command with the specified power PX. Specifically, the controller 34 determines whether the charging power has decreased relative to the charging command at the specified power PX. When the charging power has decreased relative to the specified power PX, the controller 34 determines whether the charging power indicated by the response is larger than zero. When the charging power indicated by the response is larger than zero, the controller 34 detects that the vehicle 20 has executed charging-power tapering control.

Upon detecting that the vehicle 20 has executed charging-power tapering control, the controller 34 controls the communication device 41 to send a signal indicating that the vehicle 20 has executed the charging-power tapering control to the management server 40.

When the management server 40 receives the signal indicating that the vehicle 20 has executed charging-power tapering control, the execution device 43 starts executing the specific program PR3. That is, when the vehicle 20 executes charging-power tapering control, the execution device 43 starts executing the specific program PR3.

As shown in Fig. 10, when starting execution of the specific program PR3, the execution device 43 first performs the process of step S41. In step S41, the execution device 43 performs the specific process. The specific process is not performed when charging-power tapering control is not executed. The specific process is performed to calculate an end time ET at which the charging of the battery 23 ends.

In particular, the execution device 43 calculates the end time ET based on the required period NT, which is included in the charging profile CP associated with the type of vehicle 20 that has executed the charging-power tapering control. Specifically, the execution device 43 calculates, as the end time ET, a time obtained by adding the required period NT to the current time. Then, the execution device 43 advances the process to step S42.

In step S42, the execution device 43 executes charging management after executing the specific process. Specifically, the execution device 43 causes the mobile terminal 60, which is a display device, to display the calculated end time ET instead of the displayed estimated time PT. The execution device 43 displays the end time ET to notify the user of the vehicle 20 of the expected time at which the vehicle 20 will finish charging. Then, the execution device 43 ends the series of processes in the current cycle.

In the first embodiment, the management system 10 executes a management method in which the execution device 43, which is a computer, executes the specific program PR3 to perform the specific process and perform charging management after performing the specific process.

The management method is executed by the management system 10 including the execution device 43, which is a computer that performs charging management of the battery 23 of the vehicle 20. The management method includes performing the specific process, which is not performed when charging-power tapering control is not being performed, upon detecting that the vehicle 20 has performed charging-power tapering control on the battery 23 being charged. The management method includes performing charging management after performing the specific process when the vehicle 20 performs charging-power tapering control.

In other words, the specific program PR3 is executed by the execution device 43, which is a computer that performs charging management of the battery 23 in the vehicle 20. The specific program PR3 causes the execution device 43 to perform the specific process, which is not performed when charging-power tapering control is not being performed, upon detecting that the vehicle 20 has performed charging-power tapering control on the battery 23 being charged. The specific program PR3 causes the execution device 43 to perform charging management after performing the specific process when the vehicle 20 performs charging-power tapering control.

### Operation of the First Embodiment

In the first embodiment, the vehicle 20 that has traveled the expected travel distance D starts charging, and then, if the vehicle 20 does not execute charging-power tapering control, finishes charging at the expected time PT.

The vehicle 20 that has traveled the expected travel distance D starts charging, and then, if the vehicle 20 executes charging-power tapering control, does not finish charging at the expected time PT. In this case, the vehicle 20 finishes charging at the end time ET.

### Advantages of the First Embodiment

(1-1) The management server 40 includes the execution device 43, which performs charging management of the battery 23 of the vehicle 20. The execution device 43 performs the specific process, which is not performed when charging-power tapering control is not being performed, upon detecting that the vehicle 20 has performed charging-power tapering control on the battery 23 being charged. When the vehicle 20 performs charging-power tapering control, the execution device 43 performs charging management after performing the specific process.

When the vehicle 20 performs charging-power tapering control, the execution device 43 of the management server 40 performs charging management after performing the specific process. This allows the management server 40 to properly perform charging management when the vehicle 20 performs charging-power tapering control.

(1-2) The specific process calculates the end time ET, at which the charging of the battery 23 ends. The management server 40 calculates a later end time ET when charging-power tapering control is executed than when charging-power tapering control is not executed. This allows the management server 40 to perform charging management based on the end time ET.

(1-3) The management server 40 further includes the storage device 44, which stores the required period NT from the start of charging-power tapering control associated with each type of vehicle 20 to the end of the charging of the battery 23. The execution device 43 calculates the end time ET based on the required period NT associated with the type of vehicle 20 that has executed the charging-power tapering control.

In the charging-power tapering control, the manner of reducing the charging power may differ depending on the type of vehicle 20. Accordingly, the required period NT may vary depending on the type of vehicle 20. The management server 40 calculates the end time ET based on the required period NT associated with the type of vehicle 20 that has executed charging-power tapering control. Thus, even if the required period NT varies depending on the type of vehicle 20, the end time ET is properly calculated.

(1-4) The execution device 43 causes the display device associated with the vehicle 20 to display the calculated end time ET. By displaying the end time ET on the display device, the management server 40 notifies the user of the vehicle 20 of the end time ET.

(1-5) The display device is the mobile terminal 60 associated with the vehicle 20. Thus, the user of the vehicle 20 is able to recognize the end time ET even when not in the vehicle 20.

(1-6) When starting charging of the battery 23, the execution device 43 calculates the estimated time PT, at which the charging of the battery 23 ends, based on the expected travel distance D of the vehicle 20. Further, the execution device 43 causes the display device to display the calculated estimated time PT. When the vehicle 20 executes charging-power tapering control, the execution device 43 displays the end time ET instead of the estimated time PT.

Compared with the estimated time PT calculated regardless of whether the vehicle 20 has executed charging-power tapering control, the end time ET calculated in consideration of the execution of charging-power tapering control by the vehicle 20 is more likely to match the time at which charging ends. Thus, since the display device displays the end time ET, which is more likely to approach the time at which charging ends, the user of the vehicle 20 is able to accurately recognize the time at which charging ends.

### Second Embodiment

The management system 10 according to a second embodiment will now be described with reference to the drawings. In the second embodiment, the specific process and the detailed content performed as charging management differ from those in the first embodiment. The following description focuses on differences from the first embodiment, and identical portions are briefly described or omitted.

In the second embodiment, charging management is energy management. In the second embodiment, the specific process refers to a process that excludes one or more of the vehicles 20 that have executed charging-power tapering control from a control target of the energy management.

For example, the management server 40 controls the power supply facilities 30 of multiple vehicles 20 as the energy management. Specifically, the management server 40 adjusts the charging power with which each vehicle 20 can be charged such that the total value of the charging power during charging using the external power supply 50 becomes a predetermined reference value RV. Thus, the management server 40 manages the charging of the batteries 23 of multiple vehicles 20 using multiple power supply facilities 30.

### Exclusion of Energy Management from Control Target, as Specific Process

In the second embodiment, when the management server 40 receives a signal indicating that the vehicle 20 has executed charging-power tapering control, the execution device 43 starts executing the specific program PR3. The specific program PR3 in the second embodiment is a program for exclusion from the control target of energy management as the specific process.

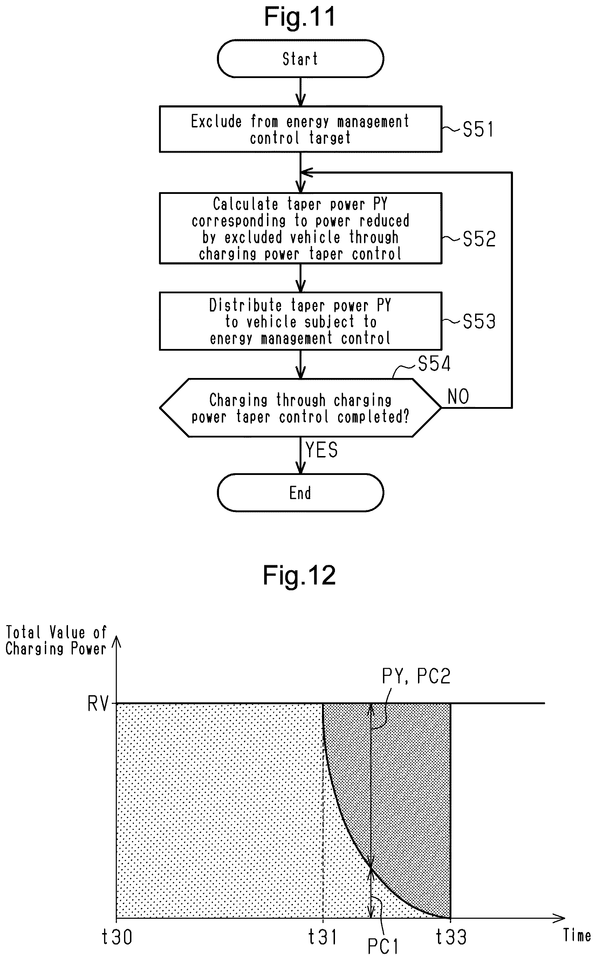

As shown in Fig. 11, upon starting execution of the specific program PR3, the execution device 43 first starts the process of step S51. In step S51, the execution device 43 excludes one or more of the vehicles 20 that have executed the charging-power tapering control from energy management control targets. Then, the execution device 43 advances the process to step S52.

In step S52, the execution device 43 calculates a taper power PY corresponding to the charging power reduced by the excluded vehicle 20 through the charging-power tapering control. The taper power PY is a value obtained by subtracting, from the specified power PX, the charging power obtained during the execution of charging-power tapering control. Then, the execution device 43 advances the process to step S53.

In step S53, the execution device 43 distributes the taper power PY to the vehicle 20 subject to energy management control. That is, the execution device 43 uses the electric power corresponding to the taper power PY to charge the battery 23 of one or more of the vehicles 20 that have not executed charging-power tapering control. Then, the execution device 43 advances the process to step S54.

In step S54, the execution device 43 determines whether the charging of the vehicle 20 that has executed charging-power tapering control is completed. For example, when the power supply facility 30 detects that the charging power indicated by a response from the vehicle 20 to a charging command has reached zero, the execution device 43 acquires a notification indicating that the charging of the vehicle 20 from the power supply facility 30 is completed. Upon acquiring the notification, the execution device 43 determines that the charging of the vehicle 20 is completed.

When determining that the charging of the vehicle 20 that has executed charging-power tapering control is not completed (S54: NO), the execution device 43 returns the process to step S52. Then, the execution device 43 repeats the processes from step S52 to step S54.

When determining that the charging of the vehicle 20 that has executed charging-power tapering control is completed (S54: YES), the execution device 43 ends the series of processes in the current cycle. Thus, in the second embodiment, the execution device 43 performs the specific process, which excludes one or more of the vehicles 20 that have executed charging-power tapering control from energy management control targets, and then performs energy management for the vehicle 20 subject to control.

### Operation of the Second Embodiment

In the following example, the management server 40 performs energy management on two vehicles 20, namely, a first vehicle and a second vehicle, using two power supply facilities 30, namely, a first power supply facility and a second power supply facility. The management server 40 performs energy management such that the total value of the charging power of the two vehicles 20 becomes the reference value RV.

As shown in Fig. 12, at time t30, a first charging power PC1, which is the charging power of the first vehicle, is the reference value RV. Accordingly, the total value of the charging power of the two vehicles 20 is the reference value RV. Subsequent to time t30, the first vehicle performs charging-power tapering control at time t31.

When the first vehicle starts charging-power tapering control, the first vehicle is excluded from the control target of energy management performed by the management server 40. Thus, the charging power of the first vehicle changes in accordance with the charging-power tapering control. As a result, the charging power of the first vehicle is, for example, gradually reduced after time t31.

At time t31, the management server 40 sets the taper power PY of the first vehicle to a second charging power PC2, which is the charging power of the second vehicle, and then starts charging the second vehicle. The first charging power PC1 gradually decreases from time t31. Thus, the second charging power PC2 gradually increases from time t31.

Subsequent to time t31, the charging of the first vehicle is completed at time t33. As a result, the second charging power PC2 becomes the reference value RV. In addition, the use of the taper power PY of the first vehicle to charge the second vehicle, which has not performed charging-power tapering control, is completed.

### Advantage of the Second Embodiment

The second embodiment provides the following advantages in addition to advantage (1-1) of the first embodiment.

(2-1) Charging management is energy management for managing charging of the batteries 23 of multiple vehicles 20. The specific process excludes one or more of the vehicles 20 that have executed charging-power tapering control from a control target of the energy management.

When the management server 40 performs energy management, the vehicle 20 that has executed charging-power tapering control has a lower flexibility in adjusting the charging power than the vehicle 20 that has not executed charging-power tapering control. For energy management, the management server 40 excludes one or more of the vehicles 20 that have executed charging-power tapering control from energy management control targets. By excluding a vehicle 20 that has a relatively low flexibility in adjusting the charging power, the management server 40 prevents a reduction in the flexibility of charging power adjustment.

(2-2) The management server 40 further includes the storage device 44, which stores the charging power taper profile LP associated with each type of vehicle 20. The charging power taper profile LP is time-series data representing the charging power per unit time from the start of charging-power tapering control to the end of the charging of the battery 23. For energy management, using the taper power PY corresponding to the charging power reduced by the vehicle 20 that has executed charging-power tapering control, the execution device 43 charges the battery 23 of the vehicle 20 that has not executed charging-power tapering control.

For energy management, the execution device 43 is allowed to use the taper power PY corresponding to the charging power reduced by the vehicle 20 that has executed charging-power tapering control to charge the battery 23 of the vehicle 20 that has not executed charging-power tapering control. Accordingly, the vehicle 20 efficiently uses the reduced power without leaving excess power unused.

The management system 10 manages charging of the battery 23 of the vehicle 20. The management system 10 performs the specific process, which is not performed when charging-power tapering control is not being performed, upon detecting that the vehicle 20 has performed charging-power tapering control on the battery 23 being charged. When the vehicle 20 performs charging-power tapering control, the management system 10 performs charging management after performing the specific process.

### Modifications

The above embodiments may be modified as follows. The above embodiments and the following modifications can be combined as long as the combined modifications remain technically consistent with each other.

The vehicle 20 is not limited to a battery electric vehicle (BEV) including only the drive motor 24, which uses electrical energy stored in the battery 23, as a drive source. The vehicle 20 only needs to include the battery 23. For example, the vehicle 20 may be a plug-in hybrid electric vehicle (PHEV).

The vehicle 20 may be wirelessly communicable with the management server 40. The vehicle 20 may be configured to send vehicle identification information to the management server 40. The information processing apparatus 42 may identify the type of vehicle 20 either using vehicle identification information or using the identification program PR1. Even in this case, the information processing apparatus 42 identifies the type of vehicle 20 by executing the identification program PR1 without necessarily acquiring vehicle identification information.

The power supply facility 30 may include connectors and circuits for respective power supply systems so as to support multiple types of power supply systems, such as a DC system in addition to, for example, an AC system.

The communication between the power supply facility 30 and the vehicle 20 is not limited to power line communication. For example, the communication between the power supply facility 30 and the vehicle 20 may be performed using a CAN. In this case, the power supply facility 30 may acquire the response charging profile RCP by acquiring, through a CAN, information indicating the response charging profile RCP from the vehicle 20.

The display device is not limited to the mobile terminal 60 associated with the vehicle 20. The display device may be, for example, a display mounted on the vehicle 20. Alternatively, if the management server 40 includes a display, the display device may be, for example, that display.

In the first embodiment, the management server 40 does not have to acquire the response charging profile RCP from the power supply facility 30. For example, when the management server 40 and the vehicle 20 are wirelessly communicable with each other, the management server 40 may acquire the response charging profile RCP from the vehicle 20.

The method by which the management server 40 identifies the type of vehicle 20 is not limited to the examples described in the first embodiment. For example, the management server 40 may acquire identification information for identifying the vehicle 20 and identify the type of vehicle 20 based on the identification information.

When the charging power of the battery 23 being charged is less than a predetermined value, the management server 40 does not have to detect that the vehicle 20 has executed charging-power tapering control. For example, the management server 40 may detect that the vehicle 20 has executed charging-power tapering control by acquiring, from the vehicle 20, a notification indicating that the charging-power tapering control has been executed.

To start charging the battery 23, the execution device 43 does not have to calculate the estimated time PT and display the estimated time PT on the mobile terminal 60. To display the end time ET on the display device, the execution device 43 does not have to display the end time ET instead of the estimated time PT. For example, the execution device 43 may cause the display device to display the end time ET in addition to the estimated time PT.

The execution device 43 does not have to cause the display device to display the end time ET. For example, the execution device 43 of one vehicle 20 may generate the charging plan PL of another vehicle 20 based on the calculated end time ET.

The storage device 44 does not have to store the required period NT associated with each type of vehicle 20. The execution device 43 does not have to calculate the end time ET based on the required period NT associated with each type of vehicle 20. For example, the execution device 43 may calculate, as the end time ET, a time delayed from the estimated time PT by a predetermined fixed time regardless of the type of vehicle 20.

In the above embodiments, the information processing apparatus 42 is provided with the execution device 43, which is processing circuitry including one or more processors that run computer programs (software) to execute various processes. However, the information processing apparatus 42 may be provided with processing circuitry including one or more dedicated hardware circuits, such as application-specific integrated circuits (ASICs) that execute at least some of the processes. Alternatively, the information processing apparatus 42 may be provided with processing circuitry including a combination of one or more processors and one or more dedicated hardware circuits. The processor includes a CPU and a memory, such as a RAM and a ROM. The memory stores program codes or instructions configured to cause the CPU to execute the processes. The memory, or a computer-readable medium, includes any type of medium that is accessible by general-purpose computers and dedicated computers. The same applies to the controllers 26 and 34.

The response charging profile RCP is not limited to the time-series data representing the charging power obtained when charging is performed based on the identification charging command DCC. For example, the response charging profile RCP may represent data indicating the average value of the charging power obtained when the battery 23 is charged in accordance with the identification charging command DCC. The response charging profile RCP only needs to be data indicating a response to the charging of the battery 23 in accordance with the identification charging command DCC.

The result of comparison between the response charging profile RCP and the charging profiles CP is not limited to the example of the first embodiment. For example, fitting may be performed between the response charging profile RCP and each of the charging profiles CP so as to identify the type of vehicle 20 based on the best-matching charging profile CP.

The information processing apparatus 42 does not have to identify the type of vehicle 20 according to the result of comparison between the response charging profile RCP and the charging profile CP. For example, the information processing apparatus 42 may calculate the difference between the response charging profile RCP and the identification charging command DCC, and identify, as the type of the target vehicle, the type of vehicle 20 associated with the charging profile CP having the calculated difference. In this manner, the information processing apparatus 42 only needs to identify the type of vehicle 20 based on the response charging profile RCP and the charging profile CP.

In the above embodiments, charging management is not limited to energy management for managing charging of the batteries 23 of multiple vehicles 20. Charging management does not have to be performed by displaying the end time ET on the display device. For example, charging management may be performed by generating the charging plan PL. In this case, when performing the specific process, the execution device 43 only needs to generate the charging plan PL based on the result of the specific process.

In the second embodiment, the specific process is not limited to excluding one or more of the vehicles 20 that have executed charging-power tapering control from energy management control targets. The specific process is not limited to calculating the end time ET.

In the second embodiment, the storage device 44 does not have to store the charging power taper profile LP. For energy management, the execution device 43 does not have to charge the battery 23 of a vehicle 20 that has not executed charging-power tapering control, using the taper power PY corresponding to the charging power reduced by a vehicle 20 that has executed charging-power tapering control. For example, the execution device 43 may use, for charging a vehicle 20 subject to energy management control, electric power obtained by multiplying the number of vehicles 20 that have performed charging-power tapering control by a predetermined constant power.

In the management system 10, the management server 40 does not have to perform the charging management and the specific process. For example, the power supply facility 30 may perform the charging management and the specific process. Alternatively, when the management system 10 includes a relay device that relays between the power supply facility 30 and the management server 40, the relay device may perform the charging management and the specific process. Instead, the power supply facility 30 may perform the specific process, and the management server 40 may perform the charging management. That is, any configuration may be employed as long as the management system 10 performs the charging management and the specific process.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management server (40) configured to perform charging management of a battery (23) of a vehicle (20), the management server (40) comprising an execution device (43), wherein
the execution device (43) is configured to:
in response to execution of charging-power tapering control by the vehicle (20) on the battery (23) being charged,
execute a specific process that is not executed when the charging-power tapering control is not executed; and
execute the charging management after performing the specific process.

2. The management server (40) according to claim 1, wherein
the specific process calculates an end time (ET) at which charging of the battery (23) ends.

3. The management server (40) according to claim 2, further comprising a storage device (44) configured to store a required period (NT) from a start of the charging-power tapering control to an end of charging of the battery (23), the charging-power tapering control being associated with each type of vehicle (20), wherein
the execution device (43) is configured to calculate the end time (ET) based on the required period (NT) associated with the type of vehicle (20) that has executed the charging-power tapering control.

4. The management server (40) according to claim 2 or 3, wherein
the execution device (43) is configured to cause a display device associated with the vehicle (20) to display the calculated end time (ET).

5. The management server (40) according to claim 4, wherein
the display device is a mobile terminal (60) associated with the vehicle (20).

6. The management server (40) according to claim 4 or 5, wherein
the execution device (43) is configured to:
calculate, when starting charging of the battery (23), an estimated time (PT) at which the charging of the battery (23) ends based on an expected travel distance (D) of the vehicle (20); and
cause the display device to display the calculated estimated time (PT), and
the processing circuitry is further configured to cause the display device to display the end time (ET) instead of the estimated time (PT) when the vehicle (20) executes the charging-power tapering control.

7. The management server (40) according to claim 1, wherein
the vehicle (20) is one of multiple vehicles (20), and the battery (23) is one of multiple batteries (23),
the charging management is energy management for the vehicles (20), the energy management being performed to manage charging of the batteries (23) respectively mounted on the vehicles (20), and
the specific process excludes one or more of the vehicles (20) that have executed the charging-power tapering control from a control target of the energy management.

8. The management server (40) according to claim 7, further comprising a storage device (44) configured to store time-series data from a start of the charging-power tapering control associated with each type of vehicle (20) to an end of charging of the battery (23), the time-series data representing a charging power per unit time, wherein
the execution device (43) is configured to charge, in the energy management, the battery (23) of the vehicle (20) that has not executed the charging-power tapering control using electric power corresponding to charging power reduced by the vehicle (20) that has executed the charging-power tapering control.

9. A management system (10) configured to perform charging management of a battery (23) of a vehicle (20), wherein
the management system (10) is configured to:
in response to detecting that the vehicle (20) has performed charging-power tapering control on the battery (23) being charged,
execute a specific process that is not executed when the charging-power tapering control is not executed; and
execute the charging management after performing the specific process.

10. A management method performed by a management system (10) including a computer that is configured to perform charging management of a battery (23) of a vehicle (20), the management method comprising:
in response to detecting that the vehicle (20) has performed charging-power tapering control on the battery (23) being charged,
executing a specific process that is not executed when the charging-power tapering control is not executed; and
executing the charging management after performing the specific process.

11. A specific program (PR3) to be executed by a computer that is configured to perform charging management of a battery (23) of a vehicle (20), the specific program (PR3) causing the computer to:
in response to detecting that the vehicle (20) has performed charging-power tapering control on the battery (23) being charged,
execute a specific process that is not executed when the charging-power tapering control is not executed; and
execute the charging management after performing the specific process.
